# EUROPÄISCHE PATENTSCHRIFT

(11) **EP 0 598 787 B1**
(45) Veröffentlichungstag und Bekanntmachung des Hinweises auf die Patenterteilung: **27.12.1995**
(21) Anmeldenummer: 92917081.9
(22) Anmeldetag: 11.08.1992
(51) Int. Cl.: G21C 15/18

(54) **SEKUNDÄRSEITIGES NACHWÄRMEABFUHRSYSTEM FÜR DRUCKWASSER-KERNREAKTOREN**
PRESSURIZED-WATER REACTOR RESIDUAL-HEAT EXTRACTION SYSTEM USING THE SECONDARY COOLING CIRCUIT
SYSTEME D'ELIMINATION DE LA CHALEUR RESIDUELLE PAR LE COTE SECONDAIRE POUR LES REACTEURS NUCLEAIRES A EAU SOUS PRESSION

(30) Priorität: 12.08.1991 DE 4126629
(43) Veröffentlichungstag der Anmeldung: 01.06.1994
(73) Patentinhaber: SIEMENS AKTIENGESELLSCHAFT, 80333 München (DE)
(72) Erfinder: CONRADS, Hermann-Josef, D-8522 Herzogenaurach (DE); Czech,Jürgen, D-8522 Herzogenaurach (DE); GÖGGELMANN, Horst, D-8510 Fürth (DE); LEIDEMANN, Werner, D-8501 Obermichelbach (DE); MACKERT, Pius, D-8520 Erlangen (DE); MERKLEIN, Walter, D-8500 Nürnberg (DE); SCHILLING, Rainer, D-8520 Erlangen (DE); STAEHLE, Bernd, D-8520 Erlangen (DE); STOLL, Wilfried, D-8500 Nürnberg 10 (DE); UYTTENDAELE, Paul, D-8520 Erlangen (DE)
(86) Internationale Anmeldenummer: DE9200664
(87) Internationale Veröffentlichungsnummer: WO9304480

(56) Entgegenhaltungen:
- EP-A- 0 004 167
- EP-A- 0 079 281
- EP-A- 0 362 596
- EP-A- 0 418 701
- DE-A- 2 521 269
- FR-A- 2 294 517
- FR-A- 2 584 228

## Beschreibung

Nach dem Abschalten von Kernreaktoren fällt bei allen Betriebs - und Störfällen die sogenannte Nachwärme, auch Nachzerfallswärme genannt, an. Bei Druckwasser-Kernreaktoren wird zur Abfuhr der Nachwärme - nahezu in allen Betriebs- und Störfällen - zumindest in der Anfangsphase die Sekundärseite herangezogen; dies erfolgt durch Bespeisung der Dampferzeuger mit Speisewasser und durch Abgabe der im Dampferzeuger von seiner Primärseite auf die Sekundärseite über sein Rohrbündel übertragenen Energie direkt oder indirekt an die Umgebung.

Ein bisher bekanntes Konzept zur sekundärseitigen Nachwärmeabfuhr bei den Anlagen von Druckwasserkernreaktoren sieht für die Beherrschung von Störfällen auf der sekundärseitigen Bespeisungsseite der Dampferzeuger ein Notspeisesystem und auf der Abgabeseite eine Dampfabblaseeinrichtung mit Abblaseregel- und Sicherheitsventil vor. Dies geht z.B. hervor aus der DE-B2-24 59 150 (1) oder aus der EP-A3-0 004 167 (2). In (1) ist dargestellt, daß der jeweilige Dampferzeuger mit seiner Sekundärseite außer an seine betriebsmäßigen Speisewasser- und Frischdampfleitungen über Notkühl-Kreislaufleitungen mit Kondensatrückspeisepumpe an die eine Seite eines Sicherheitskondensators angeschlossen ist. Dieser Sicherheitskondensator, dort als Nachwärmeabfuhr-Wärmetauscher bezeichnet und mit einer zusätzlichen Kondensatkühlung ausgerüstet, kann gegebenenfalls durch ein Wasservorlage-Becken ersetzt werden. Ein solches ist in (2) dargestellt; es dient zum Abblasen des zu kühlenden sekundärseitigen Dampfes, wobei die Wasservorlage durch wärmetauschende Rohre, die an einen Kühlkreislauf angeschlossen sind, gekühlt wird. Der sekundärseitige Dampf wird durch das Abblasen in die Wasservorlage gekühlt und kondensiert, das Kondensat wird über eine Kondensatrückspeisepumpe der Sekundärseite des Dampferzeugers, d.h. seinem Speisewasserraum, wieder zugeführt.

Durch die FR-A-25 84 228 (3), entsprechend der US-A-4,765,946 (3a), ist ein sekundärseitiges Nachwärmeabfuhrsystem für einen Druckwasserreaktor bekannt, bei welchem ein Dampferzeuger, ein an diesen angeschlossener Sicherheitskondensator und ein Wasservorratsbehälter für den Sicherheitskondensator vorgesehen sind. Der Sicherheitskondensator ist dabei oberhalb des Dampferzeugers in einer solchen Höhe angeordnet, daß sich im Nachwärmeabfuhrbetrieb in den Kreislaufleitungen zwischen Dampferzeuger und Sicherheitskondensator ein Naturumlauf ergibt. Bei diesem bekannten Nachwärmeabfuhrsystem, das als Sicherheitskühlvorrichtung bezeichnet wird, ist allerdings der Wasservorratsbehälter unterhalb des Sicherheitskondensators und unterhalb des Dampferzeugers angeordnet. Damit das demineralisierte Wasser aus dem Wasservorratsbehälter in den Sicherheitskondensator gefördert werden kann, wird mit Druckbeaufschlagung und Drucksteuerung gearbeitet.

Ein Aspekt der der Erfindung zugrundeliegenden Aufgabe ist es, den sekundärseitigen Sicherheitskondensator-Kreislauf so zu gestalten, daß zum Ingangsetzen der Nachwärmeabfuhr durch den Sicherheitskondensator das Einschalten von Pumpen oder analogen Mitteln zur Druckbeaufschlagung und Drucksteuerung nicht erforderlich ist. Ergänzend dazu soll die Sicherheit des Nachwärmeabfuhrsystems nach der Erfindung dadurch verbessert werden, daß eine Einrichtung zur Nachspeisung des Sekundärmediums des Dampferzeugers bzw. des Sicherheitskondensators vorgesehen wird.

Gegenstand der Erfindung ist ein sekundärseitiges Nachwärmeabfuhrsystem für einen Druckwasserreaktor,
a) mit einem Dampferzeuger, der in eine Primärschleife des Kernreaktors mit der Primärseite seiner wärmetauschenden Rohre eingeschaltet ist,
b) mit einem Sicherheitskondensator, an dessen eine Seite die Sekundärseite des Dampferzeugers über Kreislaufleitungen angeschlossen ist,
c) mit einem Wasservorratsbehälter, dessen Kühlmedium zur Kühlung der anderen Seite des Sicherheitskondensator (Tertiärseite) dient, wobei die andere Seite des Sicherheitskondensators mit Mitteln zur Dampfabfuhr versehen ist, wobei
d) der Sicherheitskondensator oberhalb des Dampferzeugers in einer solchen Höhe angeordnet ist, daß sich im Nachwärmeabfuhrbetrieb über die Kreislaufleitungen ein Naturumlauf ergibt.

Bei einem solchen Nachwärmeabfuhrsystem wird die gestellte Aufgabe gemäß Kennzeichen des Anspruchs 1 dadurch gelöst,
e) daß der Wasservorratsbehälter oberhalb des Sicherheitskondensators angeordnet oder mit dem Sicherheitskondensator baulich vereinigt ist, und
f) daß eine Nachspeiseeinrichtung für die Sekundärseite des Dampferzeugers vorgesehen ist, bestehend aus einem Nachspeisebehälter, insbesondere für demineralisiertes Wasser, und zugehörigen Anschluß-, Druckentlastungs- und Nachfüll-Leitungen sowie Druckentlastungs- und Absperrarmaturen.

Die mit der Erfindung erzielbaren Vorteile sind vor allem darin zu sehen, daß die Eigensicherheit des Nachwärmeabfuhrsystems und seines Sicherheitskondensators verbessert sind. Dazu gehört zum einen die geodätisch höhere Anordnung des Wasservorratsbehälters im Vergleich zum Sicherheitskondensator oder - im Falle der baulichen Vereinigung des Wasservorratsbehälters mit dem Sicherheitskondensator - die geodätisch höhere Anordnung des Wasservorrats im Vergleich zum Dampferzeuger. Weiterhin gehört dazu die Sicherheit gegen Verlust an Sekundärmedium aus dem Sekundärkreis aufgrund der Nachspeiseeinrichtung.

Im folgenden wird für den Begriff "Sicherheitskondensator" - soweit nicht im Text von Patentansprüchen enthalten - die Abkürzung "SIKO" verwendet (die entsprechende englischsprachige Abkürzung lautet "SACO").

Zum Stand der Technik sei noch verwiesen auf die EP-A1-0 418 701 (4), betreffend ein System zur Abfuhr von Nachzerfallswärme aus dem Kern eines Druckwasserreaktors. In dieser Schrift ist in den Figuren 1 und 2 zwar ein Hochbehälter dargestellt, doch sind bei diesem bekannten System weder ein Sicherheitskondensator vorgesehen noch eine Nachspeiseeinrichtung für den Sekundärkreis.

Beim Nachwärmeabfuhrsystem nach der Erfindung ist für den Naturumlauf ein Abstand der beiden Wassersäulen-Spiegelhöhen von Sicherheitskondensator (Kondensatsammler) und Dampferzeuger in der Größenordnung von ca. 2 m ausreichend.

Vorteilhafte Weiterbildungen sind in den Ansprüchen 2 bis 13 beschrieben.

Es ist günstig, wenn bei der Nachspeiseeinrichtung eine erste Anschlußleitung von der Wasservorlage des Nachspeisebehälters zum kondensatseitigen Strang und eine zweite Anschlußleitung als Druckausgleichsleitung mit Isolierventil vom dampfseitigen Strang der Kreislaufleitungen des Dampferzeugers zum Dampfpolsterraum des Nachspeisebehälters verlegt sind. Der Nachspeisebehälter ist vorzugsweise mindestens auf der geodätischen Höhe des Sicherheitskondensators angeordnet.

Der Wasservorratsbehälter kann in einem gegen Einwirkung von außen geschützten Bereich außerhalb des Sicherheitsbehälters, z.B. in einem nach Art einer Armaturenkammer ausgebildeten Bunker-Anbau, angeordnet sein, und darüber hinaus kann auch der Sicherheitskondensator in diesem Bunker-Anbau angeordnet sein.

Der Sicherheitskondensator als wesentliche Komponente kann auch innerhalb des Sicherheitsbehälters (Containments) benachbart zum jeweiligen Dampferzeuger - wegen des Naturumlaufs geodätisch höher - angeordnet werden. Damit für eine optimale Kühlung im Sicherheitskondensator der Wasserstand des tertiären Kühlmediums (Deionat aus dem Wasservorratsbehälter) nicht unterhalb eines minimalen Wasserstandes fallen oder oberhalb eines maximalen Wasserstandes steigen kann, sind nach der Erfindung grundsätzlich Absperr- und Regelarmaturen auf der Sekundärseite des Dampferzeugers bzw. der einen Seite des Sicherheitskondensators und/oder Absperr- und Regelarmaturen auf der Tertiärseite bzw. der anderen Seite des Sicherheitskondensators zur Kühlleistungsregelung vorgesehen.

Eine relativ einfache Ausführung besteht in diesem Zusammenhang darin, daß Absperr- und Regelarmaturen in den tertiärseitigen Zufuhrleitungen des Sicherheitskondensators zu dessen Kühlleistungsregelung mittels Mengenregelung des zuströmenden Tertiärmediums vorgesehen sind.

Absperr- und Regelarmaturen können gemäß Anspruch 13 aber auch in dem zuflußseitigen Strang der Kreislaufleitungen des Dampferzeugers zur Kühlleistungsregelung des Sicherheitskondensators mittels Mengenregelung des in den Dampferzeuger zurückströmenden Kondensats eingefügt sein, wobei dann zur Füllstandsregelung des Tertiärmediums im Sicherheitskondensator die schon erwähnten Absperr- und Regelarmaturen in dessen tertiärseitigen Zufuhrleitungen vorgesehen sind.

Der Sicherheitskondensator kann als ein Tauchverdampfer-Dampfumformer, vorzugsweise in liegender Bauweise, ausgebildet sein. Es empfiehlt sich dann, daß der Sicherheitskondensator bei liegender Bauweise zwei separate Rohrbündel für das zu kondensierende Sekundärmedium enthält, die in Längsrichtung des Tauchverdampfergehäuses aufeinander folgen. Dies ist eine kompakte Verwirklichung des Gegenstandes nach Anspruch 4.

Der Sicherheitskondensator kann jedoch auch als Umlaufverdampfer-Dampfumformer, vorzugsweise in stehender Bauweise, ausgebildet sein.

Eine kompakte Bauweise kann auch dadurch erreicht werden, daß der Sicherheitskondensator mit dem Wasservorratsbehälter integral ist, d.h. letzterer nimmt in seinem Inneren wenigstens ein wärmetauschendes System eines Sicherheitskondensators auf.

Der Sicherheitskondensator in der Ausführung als Durchlaufverdampfer (stehende Bauweise) weist eine sehr günstige kompakte Bauform auf, was für die Anordnung innerhalb des Containments von Vorteil ist.

Im folgenden werden anhand mehrerer, in der Zeichnung dargestellter Ausführungsbeispiele weitere Merkmale und Vorteile der Erfindung sowie ihre Wirkungsweise noch näher erläutert. In der Zeichnung zeigt in zum Teil vereinfachter, schematischer Darstellung:
Figur 1 das Schaltbild für eine erste Ausführungsform eines sekundärseitigen Nachwärmeabfuhrsystems nach der Erfindung mit einem einfachen Sicherheitskondensator,
Figur 2 ein Schaltbild für ein zweites Beispiel eines sekundärseitigen Nachwärmeabfuhrsystems nach der Erfindung mit einem Doppel-Sicherheitskondensator,
Figur 3 ein Schaltbild für ein drittes Ausführungsbeisiel mit einem Sicherheitskondensator, der mit einem Wasservorratsbehälter integral ist,
Figur 4 das Ausführungsbeispiel nach Figur 1 in einer etwas ausführlicheren Darstellung und mit einer der Sekundärseite des Nachwärmeabfuhrsystems zugeordneten Nachspeiseeinrichtung,
Figur 5 einen Tauchverdampfer-Dampfumformer in DuplexBauweise, der für einen Doppel-Sicherheitskondensator nach Figur 2 Verwendung finden kann und
Figur 6 einen Umlaufverdampfer-Dampfumformer für stehende Bauweise, der für einen Einfach-Sicherheitskondensator, z.B. für die in Figur 1 oder 4 schematisch dargestellten, Verwendung finden kann,
Figur 7 einen Durchlauf-Dampfumformer als Sicherheitskondensator.

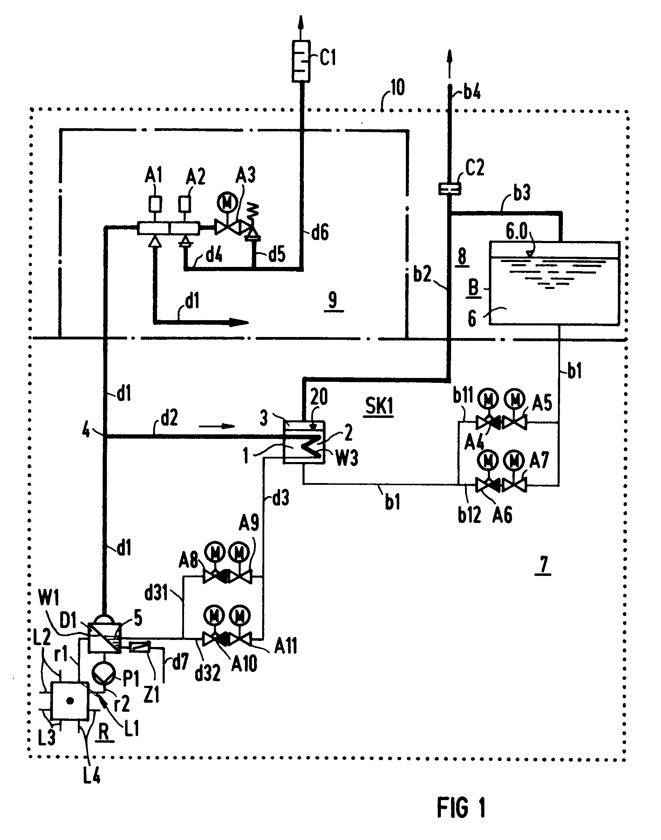

Der Kernreaktor R nach Figur 1 in Vier-Loop-Bauweise, von denen nur ein Loop L1 näher dargestellt und die übrigen L2, L3, L4 lediglich angedeutet sind, weist in seiner jeweiligen Primärschleife (Loop) einen heißen, zum Rohrbündel W1 des Dampferzeugers D1 führenden Primärkühlmittelstrang r1 auf. Vom Rohrbündel W1 der Dampferzeuger D1 führt jeweils der sogenannte kalte Strang r2 über eine Primärkreiskühlmittelpumpe P1 zurück zum einlaßseitigen Rohrstutzen des Kernreaktors R, der ein Druckwasserkernreaktor ist. Im folgenden sei nur das sekundärseitige Nachwärmeabfuhrsystem des Dampferzeugers D1 näher beschrieben.

Dampfseitig ist an den Dampferzeuger D1 die Frischdampfleitung d1 angeschlossen, die zum Frischdampfventil A1 führt, und vom Auslaß des Frischdampfventils A1 führt ein weiterer Teil der Frischdampfleitung d1 zur Turbine. Die Turbine, ihr Schnellschluß- und ihr Regelventil sowie die weiteren Komponenten und Rohrleitungen des Wärmekreislaufs sind nicht dargestellt, weil zum Verständnis der Erfindung nicht erforderlich. Zwei druckabhängig betätigbare Sicherheitsventile A2 bzw. A3, für 100 % bzw. 15 % der Abblase-Nennleistung ausgelegt, blasen bei einem den Ansprechdruck erreichenden Überdruck in der Frischdampfleitung d1 über die Abblaseleitungen d4 bzw. d5 und die gemeinsame Abblaseleitung d6, ferner über einen Schalldämpfer C1 über Dach ab.

Dem Dampferzeuger D1 wird sein Speisewasser im Normalbetrieb über eine nicht dargestellte Hauptspeisewasserpumpe und die Speisewasserleitung d7 sowie ein Rückschlagventil Z1 zugeführt. Wenn nun bei einer Störung, z.B. einem Heizrohrleck im Dampferzeuger D1, das Frischdampfventil Al abgesperrt wird (die Absperrung von A1 wird automatisch bewirkt, wenn durch Aktivitätsmeßeinrichtungen im Sekundärkreislauf eine einen Grenzwert erreichende Aktivitätserhöhung festgestellt wird), dann tritt das sekundärseitige Nachwärmeabfuhrsystem nach der Erfindung in Funktion. Zu diesem gehört der Sicherheitskondensator SK1 mit seinem Rohrbündel W3. Der Sicherheitskondensator SK1 weist hier einen Behälter 1 auf, der mit einer Wasservorlage 2 bis zum Spiegel 2.0 gefüllt ist, wobei sich oberhalb des Spiegels 2.0 ein Dampf-Gas-Raum 3 befindet. Das Rohrbündel W3 ist weitgehend in die Wasservorlage 2 eingetaucht. Die SIKO-Kreislaufleitungen des Sicherheitskondensators SK1 bestehen aus einem heißen oder dampfseitigen Strang, der gebildet wird vom ersten, bis zum Verzweigungspunkt 4 reichenden Abschnitt der Frischdampfleitung d1, und von dem Leitungsteil d2, der bis zum Einlaß des Rohrbündels W3 führt. Der kalte oder kondensatseitige Strang der SIKO-Kreislaufleitungen wird gebildet durch den Leitungsteil d3, welcher vom Auslaß des Rohrbündels W3, zweckmäßig über eine Regel- und Absperrventilstation A9-A11, in den Speisewasserraum 5 des Dampferzeugers D1 mündet.

In den Mantelraum 1 des Sicherheitskondensators SK1 mündet, vorzugsweise in dessen Bodenbereich, eine tertiäre Zufuhrleitung bl, die einlaßseitig an den Boden eines Wasservorratsbehälters B angeschlossen ist, welcher vorzugsweise eine Deionatvorlage 6 bis zum Spiegel 6.0 enthält. Der Wasservorratsbehälter B ist außerhalb des Sicherheitsbehälters 7 geodätisch höher liegend als der Sicherheitskondensator SK1 in einem gesicherten Bereich 8 angeordnet. Der gesicherte Bereich 8 kann z.B. durch einen Bunkeranbau an den Sicherheitsbehälter 7 gebildet sein. In einem solchen Bunkeranbau ist auch die Armaturenkammer 9 untergebracht. Die beiden Kammerräume 8 und 9 sowie der teilweise dargestellte Raum des Sicherheitsbehälters 7 sind durch gepunktete bzw. strichpunktierte Linien hervorgehoben. Vom Dampf-Raum 3 des Sicherheitskondensators SK1 geht die tertiäre Abblaseleitung b2 ab, welche im vorliegenden Fall über eine Drosselstelle C2 zum äußeren Teil b4 einer Abblaseleitung führt. Durch die äußere gepunktete Linie 10 ist zum Ausdruck gebracht, daß die beiden Kammern 8 und 9, ferner auch die Leitung b3 und die Drosselstelle C2 in einem gegen Einwirkung von außen geschützten Bereich untergebracht sind. Die Leitung b3 ist eine Druckausgleichsleitung, über welche dem Wasservorratsbehälter B ein begrenzter Druck aufgeprägt wird. Da das dargestellte Nachwärmeabfuhrsystem zu einer Vier-Loop-Anlage eines Druckwasser-Kernkraftwerks gehört, so ist auch mindestens ein weiterer Wasservorratsbehälter vorgesehen, wobei dann die Leitung b3 zu den (nicht dargestellten) Wasservorratsbehältern und weiteren Abblaseleitungen führen würde.

Die tertiärseitige Zufuhrleitung b1 enthält zwei Leitungszweige b11 und b12 mit je einer Reihenschaltung aus motorbetätigbarem Absperrventil und Regelventil A4, A5 bzw. A6, A7. Hiermit erfolgt eine Füllstandsregelung für den Sicherheitskondensator SK1 (tertiärseitig), indem nur so viel Kühlwasser aus dem Wasservorratsbehälter B in den Sicherheitskondensator SK1 eingespeist wird, daß der Wasserspiegel 2.0 nur innerhalb vorgegebener Grenzen schwanken kann, so daß die ordnungsgemäße Kühlfunktion für das durch das Rohrbündel W3 im Naturumlauf zirkulierende Sekundärmedium gewährleistet ist. Zusätzlich zu den Absperrund Regelarmaturen A4 bis A7 in den Leitungszweigen b11, b12, die zur Füllstandsregelung des Tertiärmediums im Sicherheitskondensator SK1 dienen, weitere Absperr- und Regelarmaturen A8, A9 im Leitungszweig d31 und A10, A11 im Leitungszweig d32 in den zuflußseitigen (kalten) Strang d3 der SIKO-Kreislaufleitungen d1 bis d3 des Dampferzeugers D1 zwecks Kühlleistungsregelung des Sicherheitskondensators eingeschaltet. Ebenso wie bei den beiden Leitungszweigen b11, b12 dienen die parallelen Leitungszweige mit ihren Armaturen der Vergrößerung der Redundanz.

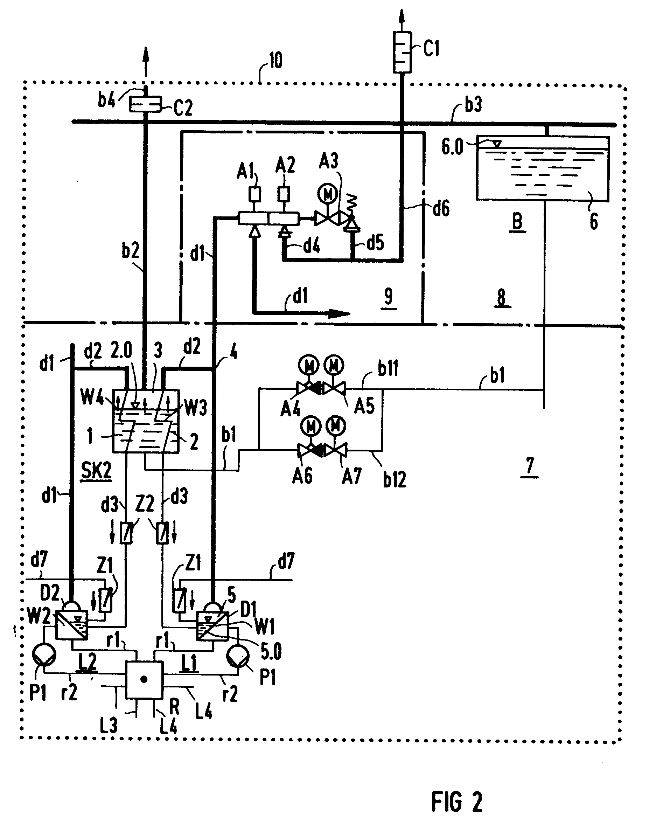

Das Ausführungsbeispiel nach Figur 2 unterscheidet sich von demjenigen nach Figur 1 dadurch, daß ein Sicherheitskondensator SK2 sekundärseitg zwei getrennte Rohrbündel W3 und W4 enthält, die je einem Dampferzeuger D1 bzw. D2 zugeordnet sind. Ferner sind die Absperr- und Regelarmaturen A4 - A7 in den tertiärseiigen Zufuhrleitungen b1, b11, b12 des Sicherheitskondensators SK2 zu dessen Kühlleistungsregelung mittels Mengenregelung des zuströmen Tertiärmediums 6 vorgesehen.

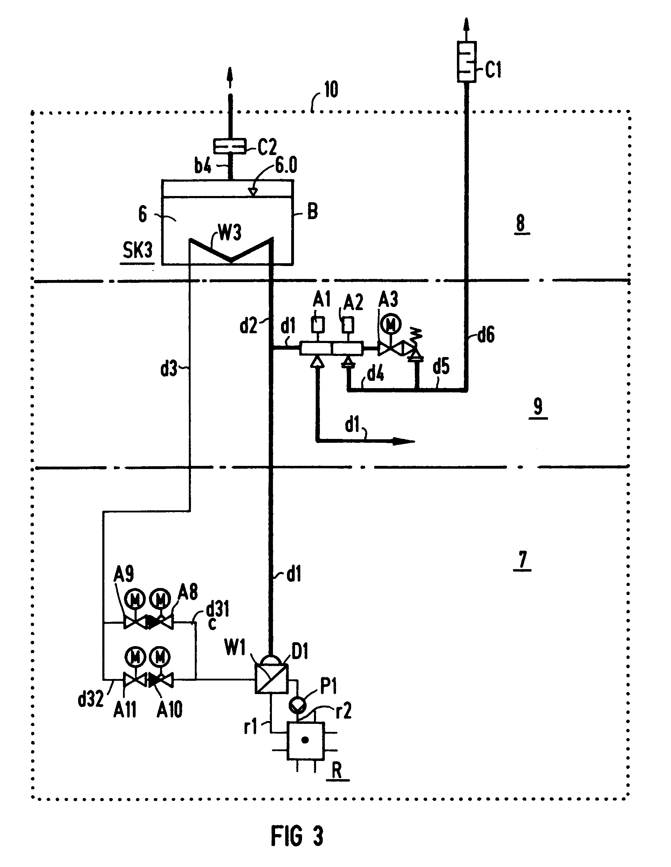

Die Schaltung nach Figur 3 unterscheidet sich von derjenigen nach Figur 1 dadurch, daß der Wasservorratsbehälter B zugleich einen Sicherheitskondensator SK3 bildet und hierzu in seinem Inneren wenigstens ein wärmetauschendes System bzw. Rohrbündel W3 eines Sicherheitskondensators aufnimmt, mit anderen Worten: Der Wasservorratsbehälter B und der Sicherheitskondensator SK3 bilden eine Baueinheit. Die Leistungsregelung erfolgt wieder sekundärseitig mittels der beiden Armaturen-Kombinationen A8/A9 und A10/A11. Eine Füllstandsregelung im Wasservorratsbehälter B ist bei dieser Schaltungsvariante nicht erforderlich.

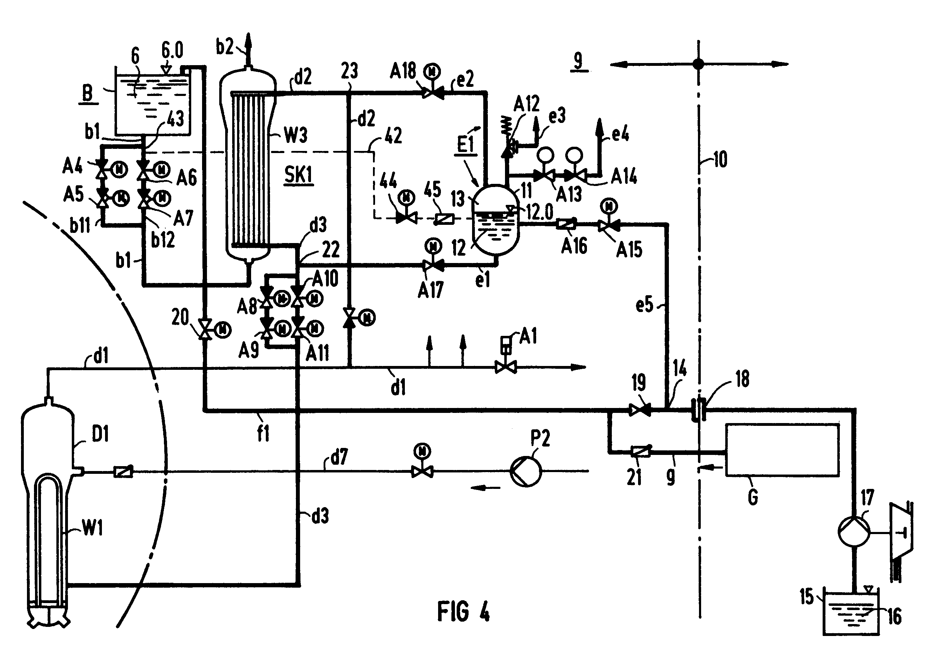

Die Schaltung nach Figur 4 weist im Vergleich zu derjenigen nach Figur 1, mit der sie in der Grundschaltung des Nachwärmeabfuhrsystems übereinstimmt, die Besonderheit auf, daß eine Nachspeiseeinrichtung E1 für die Sekundärseite des Dampferzeugers D1 vorgesehen ist, bestehend aus einem Nachspeisebehälter 11, welcher eine Wasservorlage 12, vorzugsweise aus demineralisiertem Wasser und ein darüber befindliches Dampfpolster 13 aufweist, und bestehend aus zugehörigen Anschlußleitungen e1, e2 mit Isolierventilen A17, A18, einer Druckentlastungsleitung e4 mit Entlastungsventil A13, A14 einer Druckabsicherungsleitung e3 mit dem Sicherheitsventil A12 und bestehend aus der Nachfülleitung e5, in welcher in Reihenschaltung eine motorbetätigte Armatur A15 und eine Rückschlagklappe A16 angeordnet sind. Weiterhin ist eine Hauptnachfülleitung f1 vorgesehen, an welche der Nachspeisebehälter 11 über seine Nachfülleitung e5 angeschlossen ist (Anschlußstelle 14). Ein außerhalb des geschützten Bereichs 9 befindliches Löschwasserbecken 15 mit Wasserfüllung 16 dient dazu, über eine (mobile) Feuerlöschpumpe 17 und die Hauptnachfülleitung f1, die Kupplung 18 und ein Absperrventil 19, ferner über ein weiteres motorgetriebenes Absperrventil 20 in den Wasservorratsbehälter B zu fördern oder über den Verzweigungspunkt 14 und über die Nachfülleitung e5 Lösch- bzw. trinkbares Wasser in den Nachspeisebehälter 11 zu fördern. Figur 4 zeigt eine gestrichelte Verbindungsleitung 42, die von b1 (Anschlußpunkt 43) über Motorarmatur 44 und Rückschlagklappe 45 in die Wasservorlage 12 des Nachspeisebehälters 11 führt. Weil der Wasservorratsbehälter B geodätisch höher liegt als der Nachspeisebehälter 11 (letzterer ist mindestens auf der geodätischen Höhe des Sicherheitskondensators SK1 angeordnet), so kann bei geöffnetem Ventil (Motorarmatur) 44 Wasser aus der Wasservorlage 6 des Wasservorratsbehälters in den Nachspeisebehälter 11 im Bedarfsfall eingespeist werden. Die betriebliche Wasserergänzung erfolgt durch Eispeisung demineralisierten Wassers von einer Wasseraufbereitungsanlage G über Leitung g mit Rückschlagventil 21 in die Hauptnachfülleitung f1 und von hier entweder in den Wasservorratsbehälter B (bei geöffnetem Ventil 20 und geschlossenem Ventil 19) oder bei geschlossenem Ventil 20 und geöffneten Ventilen 19 und A15 in den Nachspeisebehälter 11. Eine zum Wasseraufbereitungssystem G gehörige Pumpe, welche die erforderliche Förderhöhe überwindet, ist nicht dargestellt.

Die Leitung e1 mit Isolierventil A17 ist die Anschlußleitung, welche von der Wasservorlage 12 des Nachspeisebehälters 11 zum kondensatseitigen Strang d3 der SIKO-Kreislaufleitungen d1 bis d3 des Dampferzeugers D1 führt (Anschlußstelle 22). Die Leitung e2 ist eine Druckausgleichsleitung, welche über das Isolierventil A18 vom dampfseitigen Strang d2 der SIKO-Kreislaufleitungen zum Dampfpolsterraum 13 (der Spiegel der Wasservorlage 12 ist mit 12.0 bezeichnet) verlegt ist (Anschlußstelle 23).

Ausgehend von einem gefüllten, drucklosen Nachspeisebehälter 11 erfolgt eine Einspeisung in den (sekundärseitigen) SIKO-Kreislauf d1 bis d3 durch Druckbeaufschlagung des Nachspeisebehälters 11 über die dampfseitige Verbindung e2 (Isolierventil A18 geöffnet) und durch Öffnung des Isolierventils A17 der kondensatseitigen Anschlußleitung el. Es kann in dieser Auffüllphase ein eventuell zu niedriger Füllstand im Dampferzeuger D1 wieder ausreichend angehoben werden. Nach Isolierung des Nachspeisebehälters 11 vom SIKO-Kreislauf kann der Nachspeisebehälter 11 wieder druckentlastet (Ventile A13 und A14) und nachgefüllt werden, wie bereits beschrieben. Das Nachfüllen kann auch aus einem (nicht dargestellten) Trinkwassernetz erfolgen.

Zu den besonderen Vorteilen der Nachspeiseeinrichtung E1 ist auf folgendes zu verweisen:
a) Mit Hilfe der Nachspeiseeinrichtung E1 kann auch ein bereits ausgedampfter Dampferzeuger D1, dessen Sekundärkreisabschluß möglich ist, wieder zur Wärmeabfuhr nutzbar gemacht werden.
b) Die Nachspeiseeinrichtung E1 erhöht die Zuverlässigkeit des passiven sekundärseitigen Nachwärmeabfuhrsystems, da sie - zusätzlich zum dichten Sekundärkreisabschluß - inventarerhaltend wirkt.

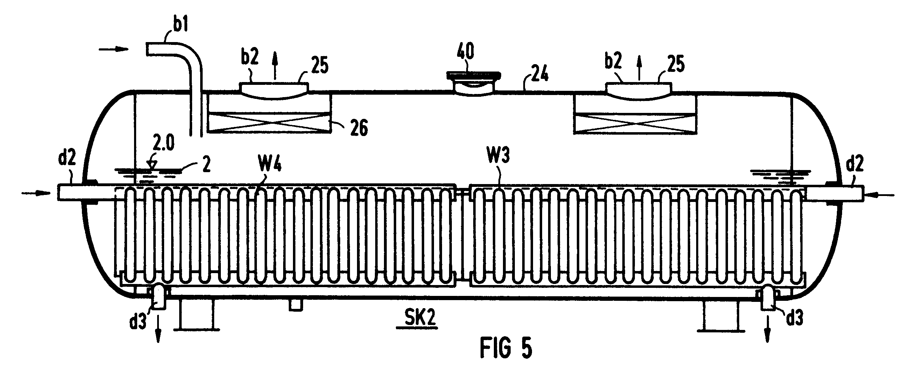

Figur 5 zeigt ein Ausführungsbeispiel für den Duplex-Sicherheitskondensator SK2 nach Figur 2 in Gestalt eines Tauchverdampfer- Dampfumformers in liegender Bauweise, welcher zwei separate Rohrbündel W3, W4 für das zu kondensierende Sekundärmedium enthält, die in Längsrichtung des etwa hohlzylindrischen Tauchverdampfergehäuses 24 aufeinander folgen. Den beiden Brüdenaustritten 25, welche in die Abblaseleitungen b2 übergehen, sind Kondensat- oder Dampfnässe-Abscheider 26 vorgeschaltet.

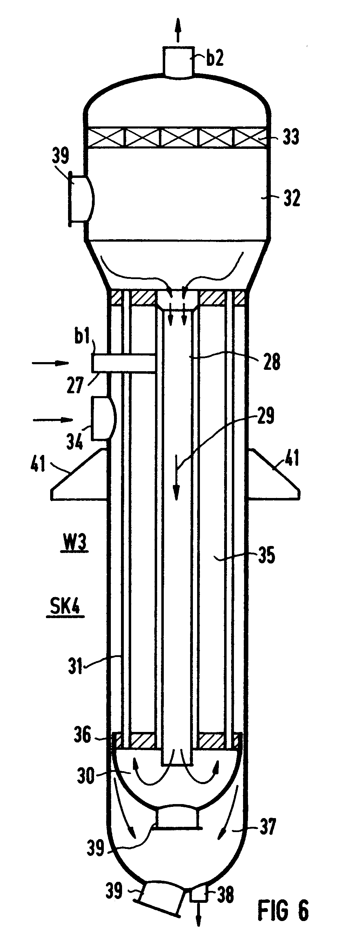

Figur 6 zeigt eine Abwandlung des Sicherheitskondensators SK2 nach Figuren 2 oder 4 in Gestalt eines Umlaufverdampfer-Dampfumformers SK4 in stehender Bauweise. Der Anschlußstutzen 27 gehört zur Wasserzufuhrleitung b1, er mündet in das Zentralrohr 28, von welchem das Wasser gemäß Richtung des Pfeils 29 in die Wasserkammer 30 gelangt. Von hier steigt das Wasser durch die übrigen Rohre 31 des Rohrbündels W3 nach oben und verdampft dabei. Der im Naßdampfraum 32 aufsteigende Dampf gelangt nach Passieren des Wasserabscheiders 33 zum Brüdenaustritt bzw. der Abblaseleitung b2. 34 ist der Stutzen für den Heizdampfeintritt, der an Leitung d2 angeschlossen ist (vgl. Figur 1); der im Heizdampfraum 35 durch Wärmetausch mit dem Rohrbündel W3 kondensierende Dampf läuft nach unten ab und gelangt durch den Ringspalt 36 in die Kondensatkammer 37 und über den Anschlußstutzen 38 in die Kondensatleitung d3 (Figur 1). Mit 39 sind Mannlochstutzen bezeichnet, durch welche die Kammern 30, 32 und 37 begehbar sind. Ein entsprechender Mannlochstutzen ist auch in Figur 5 dargestellt und dort mit 40 bezeichnet. 41 sind Tragpratzen für die vertikale Lagerung des Sicherheitskondensators SK4.

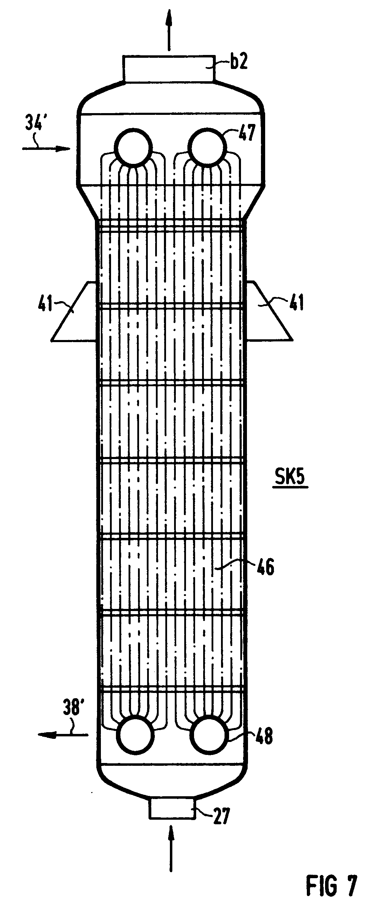

Figur 7 zeigt einen Sicherheitskondensator SK5 in der Bauart eines Durchlauf-Dampfumformers. Dieser SIKO könnte in den Beispielen nach Figur 1 und 4 für den SIKO SK1 Verwendung finden. Gleiche Teile zu Figur 6 tragen die gleichen Bezugszeichen. Das Rohrbündel 46 erstreckt sich zwischen dem oberen und dem unteren Sammlerring 47, 48. Der Heizdampf wird dem oberen Sammlerring 47 zugeführt (Pfeil 34′) und verläßt als Kondensat das Rohrbündel 46 über den unteren Sammlerring 48 und einen nicht näher dargestellten Kondensataustritt 38′. Das Kühlwasser tritt durch den unteren Stutzen 27 ein, erwärmt sich beim Aufsteigen mehr und mehr, bis es im oberen Bereich des Rohrbündels 46 verdampft und als Naßdampf den SIKO SK5 durch den Stutzen b2 verläßt.

Der Nachwärmeabfuhrbetrieb wird bei den Schaltungen nach den Figuren 1 bis 4 durch geeignete Signale eingeleitet. Bei der Schaltung nach Figur 2 kann dann der Naturumlauf über d1-d2-W3-d3-W1 sofort beginnen; die Leistungsregelung der Nachwärmeabfuhr erfolgt tertiärseitig durch Öffnen und füllstandsabhängige Einstellung der Absperr- und Regelarmaturen A4/A5 und/oder A6/A7. Bei den Schaltungen nach den Figuren 1 und 3, 4 müssen unter den genannten Voraussetzungen (R abgeschaltet, A1 geschlossen, P1 bzw. P2 abgestellt) zur Ingangsetzung des Naturumlaufs die Armaturen A8/A9 und/oder A10/A11 zunächst geöffnet und zwecks Nachschubs des Tertiärmediums auch die Armaturen A4/A5 und/ oder A6/A7 geöffnet werden. Bei der Schaltung nach Figur 1 erfolgt dann die Füllstandsregelung tertiärseitig, die Leistungsregelung wie auch beim Beispiel nach Figur 3 - sekundärseitig; beim Beispiel nach Figur 4 erfolgt die Leistungsregelung tertiärseitig.

Die Systeme nach den Figuren 1 bis 4 sind so ausgelegt, daß ein Nachwärmeabfuhrbetrieb von vorzugsweise mindestens 24 Stunden ermöglicht ist.

## Patentansprüche

1. Sekundarseitiges Nachwarmeabfuhrsystem für einen Druckwasserreaktor,
a) mit einem Dampferzeuger (D1, D2), der in eine Primärschleife (L1-L4) des Kernreaktors (R) mit der Primarseite seiner warmetauschenden Rohre (W1, W2) eingeschaltet ist,
b) mit einem Sicherheitskondensator (SK1-SK5), an dessen eine Seite die Sekundarseite des Dampferzeugers (D1, D2) über Kreislaufleitungen (d1-d3) angeschlossen ist,
c) mit einem Wasservorratsbehälter (B), dessen Kühlmedium zur Kühlung der anderen Seite des Sicherheitskondensators (SK1-SK5) (Tertiärseite) dient, wobei die anderen Seite des Sicherheitskondensators (SK1-SK5) mit Mitteln (b2) zur Dampfabfuhr versehen ist, wobei
d) der Sicherheitskondensator (SK1-SK5) oberhalb des Dampferzeugers (D1, D2) in einer solchen Höhe angeordnet ist, daß sich im Nachwärmeabfuhrbetrieb über die Kreislaufleitungen (d1-d3) ein Naturumlauf ergibt,
**dadurch gekennzeichnet**,
e) daß der Wasservorratsbehalter (B) oberhalb des Sicherheitskondensators (SK1-SK5) angeordnet oder mit dem Sicherheitskondensator (SK3) baulich vereinigt ist, und
f) daß eine Nachspeiseeinrichtung (E1) für die Sekundarseite des Dampferzeugers (D1) vorgesehen ist, bestehend aus einem Nachspeisebehalter (11), insbesondere für demineralisiertes Wasser, und zugehörigen Anschluß-, Druckentlastungs- und Nachfüll-Leitungen (e1-e5) sowie Druckentlastungs- und Absperrarmaturen (A12-A14; A17, A18).

2. Nachwarmeabfuhrsystem nach Anspruch 1,
**dadurch gekennzeichnet**, daß eine erste Anschlußleitung (e1) von der Wasservorlage (12) des Nachspeisebehälters (11) zum kondensatseitigen Strang (d3) und eine zweite Anschlußleitung als Druckausgleichsleitung (e2) mit Isolierventil (A18) vom dampfseitigen Strang (d2) der Kreislaufleitungen (d1-d3) des Dampferzeugers zum Dampfpolsterraum (13) des Nachspeisebehälters (11) verlegt sind.

3. Nachwärmeabfuhrsystem nach Anspruch 1 oder 2,
**dadurch gekennzeichnet**, daß der Nachspeisebehälter (11) mindestens auf der geodätischen Höhe des Sicherheitskondensators (SK2) angeordnet ist.

4. Nachwärmeabfuhrsystem nach Anspruch 1,
**dadurch gekennzeichnet**, daß der Sicherheitskondensator (SK2) mit wenigstens zwei wärmetauschenden Systemen (W3, W4) in seinem Inneren versehen ist, von denen jedes an je eine Sekundärseite eines Dampferzeugers ((D1, D2) angeschlossen ist.

5. Nachwärmeabfuhrsystem nach den Ansprüchen 1 oder 4,
**dadurch gekennzeichnet**, daß der Wasservorratsbehälter (B) in seinem Inneren wenigstens ein wärmetauschendes System (W3) eines Sicherheitskondensators (SK3) aufnimmt.

6. Nachwärmeabfuhrsystem nach einem der Ansprüche 1 oder 5,
**dadurch gekennzeichnet**, daß der Wasservorratsbehälter (B) in einem gegen Einwirkung von außen geschützten Gebäude außerhalb des Sicherheitsbehälters (7), vorzugsweise in einem nach Art einer Armaturenkammer ausgebildeten Bunker-Anbau (10), angeordnet ist.

7. Nachwärmeabfuhrsystem nach einem der Ansprüche 1 bis 6,
**dadurch gekennzeichnet**, daß der Sicherheitskondensator (SK2) als ein Tauchverdampfer-Dampfumformer, vorzugsweise in liegender Bauweise, ausgebildet ist.

8. Nachwärmeabfuhrsystem nach einem der Ansprüche 1 bis 6,
**dadurch gekennzeichnet**, daß der Sicherheitskondensator (SK1) als Umlaufverdampfer-Dampfumformer, vorzugsweise in stehender Bauweise, ausgebildet ist.

9. Nachwärmeabfuhrsystem nach einem der Ansprüche 1 bis 6,
**dadurch gekennzeichnet**, daß der Sicherheitskondensator (SK4) als Durchlauf-Dampfumformer, vorzugsweise in stehender Bauweise, ausgebildet ist.

10. Nachwärmeabfuhrsystem nach Anspruch 4 und 7,
**dadurch gekennzeichnet**, daß der Sicherheitskondensator (SK2) bei liegender Bauweise zwei separate Rohrbündel (W3, W4) für das zu kondensierende Sekundärmedium enthält, die in Längsrichtung des Tauchverdampfergehäuses (24) aufeinander folgen.

11. Nachwärmeabfuhrsystem nach einem der Ansprüche 1 bis 10,
**dadurch gekennzeichnet**, daß Absperrund Regelarmaturen (A8-A11) auf der Sekundärseite des Dampferzeugers (D1) bzw. der einen Seite des Sicherheitskondensators (SK1, SK3) und/oder Absperr- und Regelarmaturen (A4-A7) auf der Tertiärseite bzw. der anderen Seite des Sicherheitskondensators (SK1, SK2) zur Kühlleistungsregelung vorgesehen sind,

12. Nachwärmeabfuhrsystem nach Anspruch 11,
**dadurch gekennzeichnet**, daß Absperrund Regelarmaturen (A4-A7) in den tertiärseitigen Zufuhrleitungen (b1, b11, b12) des Sicherheitskondensators (SK1, SK2) zu dessen Kühlleistungsregelung mittels Mengenregelung des zuströmenden Tertiärmediums (6) vorgesehen sind.

13. Nachwärmeabfuhrsystem nach Anspruch 11,
**dadurch gekennzeichnet**, daß Absperrund Regelarmaturen (A8-A11) in einem zuflußseitigen Strang (d3) der Kreislaufleitungen (d1-d3) des Dampferzeugers (D1) zur Kühlleistungsregelung des Sicherheitskondensators (SK1) mittels Mengenregelung des in den Dampferzeuger (D1) rückströmenden Kondensats eingefügt sind, wobei zur Füllstandsregelung des Tertiärmediums (6) im Sicherheitskondensator (SK1) Absperr- und Regelarmaturen (A4-A7) in dessen tertiärseitigen Zufuhrleitungen (b1, b11, b12) vorgesehen sind.

## Claims

1. Secondary-side residual-heat removal system for a pressurized-water reactor,
a) having a steam generator (D1, D2), which is connected into a primary loop (L1-L4) of the nuclear reactor (R) by the primary side of its heat-exchanging tubes (W1, W2),
b) having a safety condenser (SK1-SK5), to one side of which the secondary side of the steam generator (D1, D2) is connected via circuit lines (d1-d3),
c) having a water reservoir (B), the cooling medium of which serves for cooling the other side of the safety condenser (SK1-SK5) (tertiary side), the other side of the safety condenser (SK1-SK5) being provided with means (b2) for steam removal, in which system
d) the safety condenser (SK1-SK5) is arranged above the steam generator (D1, D2) at such a level that in residual-heat removal operation via the circuit lines (d1-d3) a natural circulation is obtained,
characterized
e) in that the water reservoir (B) is arranged above the safety condenser (SK1-SK5) or is structurally united with the safety condenser (SK3), and
f) in that a make-up feed device (E1) is provided for the secondary side of the steam generator (D1), comprising a make-up feed tank (11), in particular for demineralized water, and associated connecting, pressure-relieving and replenishing lines (e1-e5) and also pressure-relieving and shut-off valves (A12-A14; A17, A18).

2. Residual-heat removal system according to Claim 1, characterized in that a first connecting line (e1) is laid from the water pool (12) of the make-up feed tank (11) to the condensate-side leg (d3) and a second connecting line is laid as a pressure-equalizing line (e2) with isolating valve (A18) from the steam-side leg (d2) of the circuit lines (d1-d3) of the steam generator to the steam-cushion space (13) of the make-up feed tank (11).

3. Residual-heat removal system according to Claim 1 or 2, characterized in that the make-up feed tank (11) is arranged at least at the geodetic level of the safety condenser (SK2).

4. Residual-heat removal system according to Claim 1, characterized in that the safety condenser (SK2) is provided with at least two heat-exchanging systems (W3, W4) inside it, of which each is connected to a secondary side each of a steam generator (D1, D2).

5. Residual-heat removal system according to Claims 1 or 4, characterized in that the water reservoir (B) accommodates inside it at least one heat-exchanging system (W3) of a safety condenser (SK3).

6. Residual-heat removal system according to one of Claims 1 or 5, characterized in that the water reservoir (B) is arranged in a building outside the containment (7), protected against external effects, preferably in a bunker extension (10) designed in the manner of a valve chamber.

7. Residual-heat removal system according to one of Claims 1 to 6, characterized in that the safety condenser (SK2) is designed as a submerged-evaporator steam regenerator, preferably of horizontal construction.

8. Residual-heat removal system according to one of Claims 1 to 6, characterized in that the safety condenser (SK1) is designed as a recirculation-evaporator steam regenerator, preferably of vertical construction.

9. Residual-heat removal system according to one of Claims 1 to 6, characterized in that the safety condenser (SK4) is designed as a single-pass steam regenerator, preferably of vertical construction.

10. Residual-heat removal system according to Claims 4 and 7, characterized in that the safety condenser (SK2) in horizontal construction includes two separate tube bundles (W3, W4) for the secondary medium to be condensed, which follow each other in the longitudinal direction of the submerged-evaporator housing (24).

11. Residual-heat removal system according to one of Claims 1 to 10, characterized in that shut-off and control valves (A8-A11) are provided on the secondary side of the steam generator (D1) or one side of the safety condenser (SK1, SK3) and/or shut-off and control valves (A4-A7) are provided on the tertiary side or the other side of the safety condenser (SK1, SK2) for cooling capacity control.

12. Residual-heat removal system according to Claim 11, characterized in that shut-off and control valves (A4-A7) are provided in the tertiary-side feed lines (b1, b11, b12) of the safety condenser (SK1, SK2) for its cooling capacity control by means of controlling the rate of the inflowing tertiary medium (6).

13. Residual-heat removal system according to Claim 11, characterized in that shut-off and control valves (A8-A11) are inserted in an inflow-side leg (d3) of the circuit lines (d1-d3) of the steam generator (D1) for controlling the cooling capacity of the safety condenser (SK1) by means of controlling the rate of the condensate flowing back into the steam generator (D1), there being provided for filling level control of the tertiary medium (6) in the safety condenser (SK1) shut-off and control valves (A4-A7) in the tertiary-side feed lines (b1, b11, b12) of said condenser.

## Revendications

1. Système d'évacuation de la chaleur résiduelle situé côté secondaire, pour un réacteur à eau sous pression, comportant
a) un générateur de vapeur (D1,D2), qui est raccordé, dans une boucle primaire (L1 à L4) du réacteur nucléaire (R), au côté primaire de ses tubes d'échange de chaleur (W1, W2),
b) un condenseur de sécurité (SK1 à SK5) à un côté duquel le côté secondaire du générateur de vapeur (D1,D2) est raccordé par l'intermédiaire de canalisations en boucle (d1 à d3),
c) un réservoir d'eau (B), dont le fluide de refroidissement sert à refroidir l'autre côté du condensateur de sécurité (SK1 à SK5) (côté tertiaire), l'autre côté du condenseur de sécurité (SK1 à SK5) étant pourvu de moyens (b2) pour évacuer la vapeur,
d) le condenseur de sécurité (SK1 à SK5) étant disposé au-dessus du générateur de vapeur (D1,D2) à un niveau tel qu'une circulation naturelle apparaît dans le fonctionnement en évacuation de la chaleur résiduelle par l'intermédiaire des canalisations en boucle (d1 à d3),
caractérisé par le fait
e) que le réservoir d'eau (B) est disposé au-dessus du condenseur de sécurité (SK1 à SK5) ou est réuni par construction au condenseur de sécurité (SK3), et
f) qu'il est prévu, pour le côté secondaire du générateur de vapeur (D1), un dispositif d'alimentation complémentaire (E1), qui est constitué d'un réservoir d'alimentation complémentaire (11), notamment pour l'eau désionisée, et de canalisations associées (e1 à e5) de raccordement, de détente de pression et de complément de remplissage, ainsi que de robinets de détente de pression et d'arrêt (A12 à A14; A17, A18).

2. Système d'évacuation de la chaleur résiduelle selon la revendication 1, caractérisé par le fait qu'une première canalisation de raccordement (e1) met le barbotteur à eau (12) du réservoir d'alimentation complémentaire (11) en communication avec la branche (d3) côté condensat et qu'une seconde canalisation de raccordement met, en tant que canalisation de compensation de pression (e2) pourvue d'une vanne d'isolement (A18), la branche (d2), située côté vapeur, des canalisations en boucle (d1 à d3) du générateur de vapeur en communication avec l'espace formant tampon de vapeur (13) du réservoir d'alimentation complémentaire (11).

3. Système d'évacuation de la chaleur résiduelle suivant la revendication 1 ou 2, caractérisé par le fait que le réservoir d'alimentation complémentaire (11) est disposé au moins au niveau géodésique du condenseur de sécurité (SK2).

4. Système d'évacuation de la chaleur résiduelle suivant la revendication 1, caractérisé par le fait que le condenseur de sécurité (SK2) contient en son intérieur au moins deux systèmes d'échange de chaleur (W3, W4), dont l'un est raccordé respectivement à un côté secondaire d'un générateur de vapeur (D1,D2).

5. Système d'évacuation de la chaleur résiduelle suivant la revendication 1 ou 4, caractérisé par le fait que le réservoir d'eau (B) loge en son intérieur au moins un système d'échange de chaleur (W3) d'un condenseur de sécurité (SK3).

6. Système d'évacuation de la chaleur résiduelle suivant l'une des revendications 1 ou 5, caractérisé par le fait que le réservoir d'eau (B) est disposé dans un bâtiment, protégé des influences provenant de l'extérieur, à l'extérieur du récipient de sécurité (7), de préférence dans une construction formant abri rapporté (10) agencée à la manière d'une chambre à robinet.

7. Système d'évacuation de la chaleur résiduelle suivant l'une des revendications 1 à 6, caractérisé par le fait que le condenseur de sécurité (SK2) est agencé sous la forme d'un séparateur à immersion - convertisseur de vapeur, de préférence de type horizontal.

8. Système d'évacuation de la chaleur résiduelle suivant l'une des revendications 1 à 6, caractérisé par le fait que le condenseur de sécurité (SK1) est agencé sous la forme d'un évaporateur à circulation - convertisseur de vapeur, de préférence de type vertical.

9. Système d'évacuation de la chaleur résiduelle suivant l'une des revendications 1 à 6, caractérisé par le fait que le condensateur de sécurité (SK4) est agencé sous la forme d'un convertisseur de vapeur à traversée, de préférence de type vertical.

10. Système d'évacuation de la chaleur résiduelle suivant les revendications 4 à 7, caractérisé par le fait que le condenseur de sécurité (SK2) de type horizontal comporte deux faisceaux distincts de tubes (W3,W4) pour le fluide secondaire devant être condensé et qui se succèdent dans la direction longitudinale de l'enveloppe de l'évaporateur à immersion (24).

11. Système d'évacuation de la chaleur résiduelle suivant l'une des revendications 1 à 10, caractérisé en ce que les robinets d'arrêt et de régulation (A8 à A11) sont prévus du côté secondaire du générateur de vapeur (D) ou d'un côté du condensateur de sécurité (SK1, SK3) et/ou que des robinets d'arrêt et de régulation (A4 à A7) sont prévus du côté tertiaire ou de l'autre côté du condenseur de sécurité (SK1, SK2) pour la régulation de la puissance de refroidissement.

12. Système d'évacuation de la chaleur résiduelle suivant la revendication 11, caractérisé en ce que les robinets d'arrêt et de régulation (A4 à A7) sont prévus dans les canalisations d'amenée (b1,b11,b12), situées du côté tertiaire, du condensateur de sécurité (SK1,SK2) pour la régulation de la puissance de refroidissement de ce condenseur au moyen d'une régulation quantitative du fluide tertiaire affluent (6).

13. Système d'évacuation de la chaleur résiduelle suivant la revendication 11, caractérisé par le fait que les robinets d'arrêt et de régulation (8 à 11) sont montés dans la branche (d3), située du côté arrivée, des canalisations en boucle (d1 à d3) du générateur de vapeur (D1) pour la régulation de la puissance de refroidissement du condenseur de sécurité (SK1) au moyen d'une régulation quantitative du condensat qui reflue dans le générateur de vapeur (D1), des robinets d'arrêt et de régulation (A4 à A7) étant prévus pour la régulation du niveau de remplissage du fluide tertiaire (6) dans le condenseur de sécurité (SK1), dans les canalisations d'arrivée (b1,b11, b12), situées côté tertiaire, de ce condenseur.
